(19) Europäisches Patentamt
European Patent Office
Office européen des brevets

(11) **EP 4 097 488 B1**

(12) **FASCICULE DE BREVET EUROPEEN**

(45) Date de publication et mention de la délivrance du brevet:
**31.12.2025 Bulletin 2026/01**

(21) Numéro de dépôt: **21701806.8**

(22) Date de dépôt: **29.01.2021**

(51) Classification Internationale des Brevets (IPC):
**G01P 13/02** (2006.01)    **G01P 21/02** (2006.01)
**G01P 13/00** (2006.01)    **G01P 21/00** (2006.01)

(52) Classification Coopérative des Brevets (CPC):
**G01P 13/025; G01P 13/0046; G01P 21/025;**
G01P 21/00

(86) Numéro de dépôt international:
**PCT/EP2021/052133**

(87) Numéro de publication internationale:
**WO 2021/152108 (05.08.2021 Gazette 2021/31)**

(54) **PROCÉDÉ D'AUTOTEST D'UNE SONDE D'INCIDENCE ET PROCÉDÉ DE VÉRIFICATION DE LA VITESSE D'UN FLUX D'AIR FOURNIE PAR UNE VOIE DE SONDES PITOT ET SONDE D'INCIDENCE ASSOCIÉS**

VERFAHREN ZUR SELBSTPRÜFUNG EINER ANSTELLWINKELSONDE UND VERFAHREN ZUM ÜBERPRÜFEN DER GESCHWINDIGKEIT EINES LUFTSTROMS, DER DURCH EINE REIHE VON ZUGEORDNETEN PITOTSONDEN UND EINE ANSTELLWINKELSONDE BEREITGESTELLT WIRD

METHOD FOR SELF-TESTING AN ANGLE-OF-ATTACK PROBE AND METHOD FOR CHECKING THE VELOCITY OF AN AIRFLOW PROVIDED BY A SERIES OF ASSOCIATED PITOT PROBES AND ANGLE-OF-ATTACK PROBE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2020 FR 2000907**

(43) Date de publication de la demande:
**07.12.2022 Bulletin 2022/49**

(73) Titulaire: **THALES**
**92400 Courbevoie (FR)**

(72) Inventeurs:
• **GUICHARD, Philippe**
  **26000 Valence Cedex (FR)**
• **SCHLOTTERBECK, Jean-Pierre**
  **26000 Valence Cedex (FR)**
• **SAHLIGER, Frédéric**
  **26000 Valence Cedex (FR)**
• **BOURLAND, Jean-Claude**
  **26000 Valence Cedex (FR)**
• **RONDEAU, Philippe**
  **26000 Valence Cedex (FR)**

(74) Mandataire: **Lavoix**
**2, place d'Estienne d'Orves**
**75441 Paris Cedex 09 (FR)**

(56) Documents cités:
**EP-A1- 2 385 378      RU-C1- 2 124 711**
**US-A1- 2019 242 924**

**Description**

La présente invention concerne un procédé d'autotest d'une sonde d'incidence.

La présente invention concerne également un procédé de vérification de la vitesse d'un flux d'air fournie par une voie de sondes Pitot et une sonde d'incidence associés.

La sonde d'incidence selon l'invention permet de mesurer un angle d'incidence d'un aéronef connu également sous le terme anglais de « Angle Of Attack ».

Dans l'état de la technique, Il existe de nombreuses technologies pour mesurer localement l'angle d'incidence de l'aéronef. La mesure de cet angle local, qui est généralement différent de l'angle global, permet au système avionique correspondant d'extrapoler l'angle d'incidence de l'avion entier à l'infini amont.

Parmi les technologies connues, les plus répandues sont les sondes rotatives. Il existe essentiellement deux grands types de sondes rotatives : les sondes de type « girouette », c'est-à-dire à palette, et les sondes à égalisation de pression différentielle entre deux zones.

En dépit des apparences, le principe de base est le même pour tous les types des sondes rotatives : l'axe de symétrie de la sonde s'aligne dans l'axe du vent relatif.

Pour les sondes de type girouette, le rappel vers la position d'équilibre est dû à l'équilibre des forces aérodynamique des deux côtés d'un élément rotatif présentant une palette dont le profil est symétrique. Le centre de poussée de la palette étant agencé en arrière de l'axe de rotation, la palette trouve l'équilibre dans l'axe du vent relatif. Un capteur d'angle traduit l'information en signal exploitable par le système et le pilote.

Pour les sondes à égalisation de pression différentielle, la partie exposée au flux d'air présente un profil aérodynamique symétrique par rapport à l'axe du vent relatif dans la position d'équilibre, mais aussi symétrique autour de l'axe de rotation. Il s'agit donc d'un cône, et non d'une palette comme dans le cas précédent.

Du fait de cette symétrie, le cône n'est soumis à aucune force aérodynamique en rotation, quel que soit son angle de rotation par rapport au vent relatif. Il n'y a aucune force de rappel aérodynamique. Deux fentes sont ménagées de part et d'autre d'une ligne génératrice du cône. Un capteur différentiel mesure l'écart de pression entre ces deux ouvertures, ou plus simplement une cloison interne trouve une position d'équilibre lorsque les valeurs de pression de part et d'autre de la cloison interne sont égales.

Cette cloison interne présente par exemple un élément rotatif dont l'angle de rotation peut être déterminé par un capteur prévu à cet effet. Cet angle de rotation caractérise alors l'écart des pressions et est utilisé pour déterminer localement l'angle d'incidence de l'aéronef.

Compte tenu de l'importance de l'angle d'incidence mesuré par les sondes d'incidence, ces sondes sont généralement associées à des moyens de test permettant de détecter leurs défaillances.

Ces défaillances peuvent être induites par des couples parasites appliqués à l'élément rotatif d'une sonde suite par exemple à un givrage de celle-ci.

Ainsi, par exemple, on connait le document FR 2 626 375 décrivant une sonde d'incidence dans laquelle la fonction d'amortissement est réalisée électromagnétiquement, de façon à présenter un minimum de frottements secs et/ou de couples parasites. À des fins de test, les mêmes moyens sont susceptibles d'assurer une fonction de positionnement dans une position prédéterminée. Cette fonction permet le test statique de la sonde lorsque l'aéronef est en stationnement au sol. Une autre sonde d'incidence du même type est par exemple connu du document US 2019/242924 A1.

Toutefois, cette solution ne permet pas de vérifier l'intégrité de la valeur fournie par la sonde en vol.

On connait du document EP 2 385 378 A1 un procédé d'autotest d'une sonde d'incidence comprenant un élément rotatif autour d'un axe de rotation sous l'influence d'un flux d'air et définissant une position d'équilibre dans laquelle sa rotation autour de l'axe de rotation est stabilisée par le flux d'air.

Le document RU 2 124 711 C1 décrit une méthode d'excitation d'un élément rotatif selon différents harmoniques.

D'autres solutions utilisées dans l'art reposent essentiellement sur la fusion des données provenant d'autres capteurs, de manière à déterminer une vraisemblance des données d'angle d'incidence.

On citera notamment l'utilisation de la mesure de vitesse selon l'axe de l'aéronef associé à l'accélération verticale par rapport à l'aéronef. Si la configuration des ailes et des volets est connue, ainsi que la masse approximative de l'aéronef, il est possible de remonter par le calcul à une plage d'angle d'incidence probable en utilisant les paramètres inertiels, de configuration aérodynamique de l'aéronef, et de poussée des moteurs.

Ce type de solution présente toutefois des inconvénients qui la rendent insuffisante pour garantir le niveau d'intégrité souhaité.

Tout d'abord, il repose sur l'intégrité simultanée de plusieurs autres systèmes. Ainsi, il suffit que l'un de ces systèmes soit défaillant ou simplement imprécis pour que des fausses alarmes apparaissent. Cela peut alors induire un doute sur les mesures angulaires et amener à des décisions mauvaises pour la suite du vol.

Ensuite, les incertitudes cumulées sur les autres paramètres induisent une incertitude sur la valeur estimée pour l'angle d'incidence. Or, dans certaines phases du vol l'écart angulaire entre le vol normal et le décrochage est faible. Là encore, de fausses alarmes pourraient conduire à écarter à tort les mesures des sondes, sans avoir de secours fiable.

Ainsi, par exemple, dans les architectures comportant seulement deux voies de mesure de l'angle d'incidence, cette situation peut se produire dès la défaillance d'une seule voie, quelle que soit la cause de cette défaillance, même logicielle.

La présente invention propose une fonction d'autotest pour une sonde d'incidence qui peut être mise en œuvre en vol et cela sans utilisation des données issues d'autres sondes similaires.

À cet effet, l'invention a pour objet un procédé d'autotest d'une sonde d'incidence, la sonde d'incidence étant apte à mesurer l'angle d'incidence d'un flux d'air dans une région de mesure et comprenant un élément rotatif autour d'un axe de rotation sous l'influence du flux d'air, l'axe de rotation étant sensiblement perpendiculaire à la direction dudit flux d'air, l'élément rotatif définissant une position d'équilibre dans laquelle sa rotation autour de l'axe de rotation est stabilisée par le flux d'air.

Le procédé comprend les étapes suivantes :

- commande d'une excitation angulaire de l'élément rotatif autour de sa position d'équilibre selon des caractéristiques d'excitation, les caractéristiques d'excitation définissant une excitation sinusoïdale de l'élément rotatif;
- acquisition de mesures angulaires relatives à la rotation de l'élément rotatif ;
- détermination d'un couple parasite appliqué à l'élément rotatif à partir des mesures angulaires et des caractéristiques d'excitation ;
- comparaison d'au moins une composante du couple parasite avec au moins un seuil prédéterminé ;
- détection d'une défaillance de fonctionnement de la sonde lorsque ladite composante dépasse le seuil prédéterminé.

Suivant d'autres aspects avantageux, le procédé d'autotest comprend une ou plusieurs des caractéristiques suivantes, prises isolément ou suivant toutes les combinaisons qui entrent dans l'étendue des revendications:

- le couple parasite est déterminé en utilisant une fonction de transfert décrivant la rotation de l'élément rotatif en présence de ce couple parasite, le couple parasite étant défini par une composante inertielle telle qu'une anomalie de moment d'inertie, une composante d'amortissement, une composante proportionnelle telle qu'un couple aérodynamique anormal, et une composante de frottement ou de déséquilibre des masses ;
- la composante inertielle, la composante d'amortissement et la composante de frottement et de déséquilibre sont déterminées en identifiant pour chaque composante correspondante la part du couple parasite en retranchant une part prédéterminée d'un couple normal maximal dans son domaine de vraisemblance ;
- une étape d'acquisition d'au moins une valeur du module de la vitesse du flux d'air, dite vitesse de consensus, issue de moyens de mesure matériellement distincts de ladite sonde ;
  de préférence lesdits moyens de mesure étant une autre sonde d'incidence ou une voie de mesure de vitesse comprenant de préférence une ou plusieurs sondes Pitot et/ou un ou plusieurs lidars ;
- la composante proportionnelle et une vitesse pression du flux d'air sont déterminées l'une par rapport à l'autre en utilisant une première mécanisation ou une deuxième mécanisation ;

    selon la première mécanisation, la vitesse de consensus est insérée dans la fonction de transfert, la composante proportionnelle étant déterminée en utilisant les autres composantes du couple parasite;
    selon la deuxième mécanisation, la composante proportionnelle est déterminée à partir d'une valeur prédéterminée, une valeur de la vitesse pression, dite vitesse extrapolée, étant déterminée en utilisant l'ensemble des composantes du couple parasite ;
    la vitesse de consensus selon la première mécanisation étant comparée à la vitesse extrapolée selon la seconde mécanisation, d'une part,
    la composante proportionnelle selon la première mécanisation étant comparée à la composante proportionnelle selon la deuxième mécanisation d'autre part,
    un critère de bon fonctionnement étant établi si lesdites comparaisons entrent dans un domaine de vraisemblance prédéterminé ;

- acquisition de données relatives au bruit aérodynamique ;
- modification des caractéristiques d'excitation en fonction des données relatives au bruit aérodynamique acquises.

La présente invention a également pour objet un procédé de vérification de la vitesse d'un flux d'air fournie par une voie de sondes Pitot comprenant une pluralité de sondes Pitot et une pluralité de sondes statiques, la voie de sondes Pitot étant apte à fournir des valeurs de la vitesse pression du flux d'air, dites premières valeurs de vitesse, déterminées en utilisant des valeurs issues des sondes Pitot et des sondes statiques.

Le procédé de vérification est mis en œuvre en utilisant une voie de sondes d'incidence, la voie de sondes d'incidence comprenant une pluralité de sondes d'incidence, chaque sonde d'incidence étant apte à mesurer l'angle d'incidence du flux d'air et comprenant un élément rotatif autour d'un axe de rotation sous l'influence du flux d'air et un module de traitement apte à mettre en œuvre le procédé d'autotest comme précédemment décrit.

Le procédé de vérification est mis en œuvre lorsqu'aucune défaillance de fonctionnement des sondes d'incidence n'a été détectée suite à la mise en œuvre du procédé d'autotest par le module de traitement de chacune des sondes d'incidence.

Le procédé de vérification comprend les étapes suivantes :

- acquisition des valeurs de la vitesse pression déterminées par les modules de traitement de l'ensemble des sondes d'incidence, chacune de ces valeurs étant dite deuxième valeur de vitesse ;
- comparaison des deuxièmes valeurs de vitesse avec les premières valeurs de vitesse et parmi ces valeurs, détermination des valeurs de vitesse retenues pour indiquer la vitesse pression du flux d'air ;
- communication des valeurs de vitesse retenues avec leur précision.

Suivant d'autres aspects avantageux, le procédé de vérification comprend une ou plusieurs des caractéristiques suivantes, prises isolément ou suivant toutes les combinaisons techniquement possibles :

- lorsque lors de l'étape de comparaison :

    - l'ensemble des premières et deuxièmes valeurs de vitesse sont concordantes entre elles, l'ensemble des premières valeurs de vitesse et des deuxièmes valeurs de vitesse sont retenues à précision nominale ;
    - l'une des premières valeurs de vitesse est discordante avec les autres premières valeurs de vitesse et avec les deuxièmes valeurs de vitesse qui sont concordantes entre elles et avec les autres premières valeurs de vitesse, lesdites autres premières valeurs de vitesse et l'ensemble des deuxièmes valeurs de vitesse sont retenues à précision nominale ;
    - les premières valeurs de vitesse sont discordantes entre elles et aucune de ces valeurs ne concorde avec les deuxièmes valeurs de vitesse qui sont concordantes entres elles, les premières valeurs de vitesse sont conservées à précision dégradée et les deuxièmes valeurs de vitesse sont retenues à précision nominale ;
    - l'ensemble des premières valeurs sont concordantes entre elles mais discordantes avec les deuxièmes valeurs de vitesse qui sont concordantes entre elles, l'ensemble des premières valeurs de vitesse et des deuxièmes valeurs de vitesse sont retenues à précision nominale avec une indication de doute sur les valeurs fournies ;

    aucune valeur de vitesse n'étant retenue dans les autres cas.

La présente invention a également pour objet une sonde d'incidence apte à mesurer l'angle d'incidence d'un flux d'air dans une région de mesure et comprenant un élément rotatif autour d'un axe de rotation sous l'influence du flux d'air, l'axe de rotation étant sensiblement perpendiculaire à la direction dudit flux d'air, l'élément rotatif définissant une position d'équilibre dans laquelle sa rotation autour de l'axe de rotation est stabilisée par le flux d'air ; la sonde d'incidence étant caractérisée en ce qu'elle comprend en outre un module de traitement apte à mettre en œuvre un procédé d'autotest comme précédemment décrit.

Suivant d'autres aspects avantageux, la sonde d'incidence comprend une ou plusieurs des caractéristiques suivantes, prises isolément ou suivant toutes les combinaisons qui entrent dans l'étendue des revendications:

- un moteur d'excitation apte à induire une excitation de l'élément rotatif autour de sa position d'équilibre selon les caractéristiques connues, les caractéristiques d'excitation définissant une excitation sinusoïdale de l'élément rotatif; de préférence le moteur d'excitation étant un moteur électrique couplé à un volant d'inertie ;
- des moyens de stabilisation de l'élément rotatif autour de sa position d'équilibre, lesdits moyens de stabilisation étant de nature mécanique ou électrique ;
- le moteur d'excitation présente les moyens de stabilisation de nature électrique ;
- un capteur apte à générer des mesures angulaires relatives à la rotation de l'élément rotatif ;
- l'élément rotatif est une girouette exposée directement au flux d'air ;
- l'élément rotatif est compris dans un cône exposé au flux d'air et symétrique par rapport à l'axe de rotation.

Ces caractéristiques et avantages de l'invention apparaîtront à la lecture de la description qui va suivre, donnée uniquement à titre d'exemple limitatif, et faite en référence aux dessins annexés sur lesquels :

- [Fig 1] la figure 1 est une vue schématique d'une sonde d'incidence selon l'invention ;
- [Fig 2] la figure 2 est un organigramme d'un procédé d'autotest selon l'invention, le procédé d'autotest étant mis en œuvre par la sonde d'incidence de la figure 1 ;
- [Fig 3] la figure 3 est une vue schématique d'une voie de sondes Pitot et d'une voie de sondes d'incidence, la voie de sonde d'incidence comprenant une pluralité de sondes d'incidence analogues à celle de la figure 1 ;
- [Fig 4] la figure 4 est un organigramme d'un procédé de vérification de la voie de sondes Pitot de la figure 3, selon l'invention.

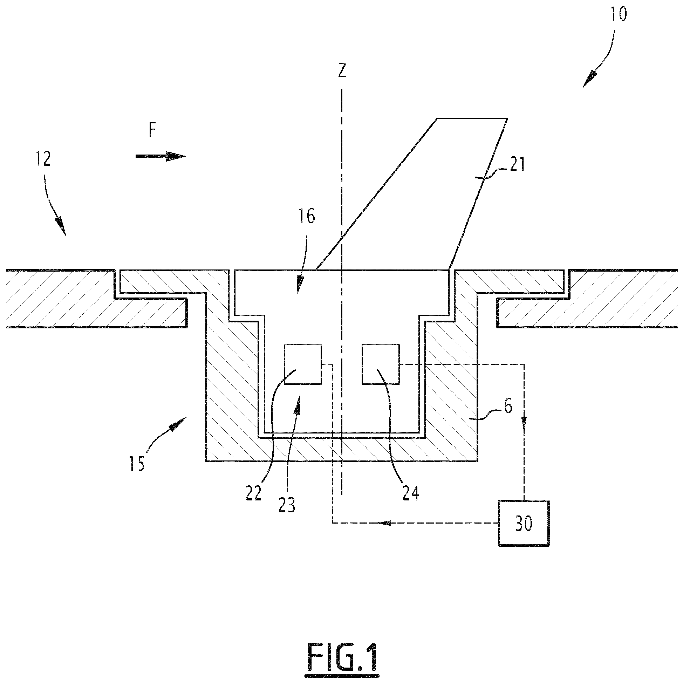

On a en effet illustré sur la figure 1 une sonde d'incidence 10 selon l'invention.

Cette sonde 10 est par exemple intégrée dans une partie avant d'un fuselage 12 d'un aéronef et permet de mesurer localement un angle d'incidence de l'aéronef.

Autrement dit, la sonde 10 permet de mesurer l'angle d'incidence dans une région de mesure adjacente alors au point d'intégration de la sonde 10 dans le fuselage 12 de l'aéronef.

En référence à la figure 1, la sonde 10 comprend une partie fixe présentant un support 15 intégré de manière immobile dans le fuselage 12 de l'aéronef et une partie mobile 16 montée rotative dans le support 15 par rapport à l'axe de rotation Z.

L'axe Z est par exemple sensiblement perpendiculaire à la surface extérieure du fuselage 12 et donc au flux d'air incident lors du vol de l'aéronef. Ce flux d'air est dénoté par la référence F sur la figure 1.

La partie mobile 16 comprend un élément rotatif 21, un moteur d'excitation 22, des moyens de stabilisation 23 et un capteur 24.

L'élément rotatif 21 est apte à entrainer en rotation la partie mobile 16 autour de l'axe de rotation Z sous l'influence du flux d'air F.

Cet élément rotatif 21 définit par ailleurs une position d'équilibre dans laquelle sa rotation autour de l'axe de rotation Z est stabilisée par le flux d'air F.

Dans l'exemple de la figure 1, l'élément rotatif 21 est directement exposé au flux d'air F et présente donc la forme d'une palette. Ainsi, dans l'exemple de cette figure, la sonde 10 est une sonde de type girouette.

Selon un autre exemple de réalisation (non-illustré), la sonde 10 est une sonde à égalisation de pression différentielle entre deux zones. Dans ce cas, la sonde comprend en outre un cône symétrique exposé au flux d'air F et pourvu d'une fente pour chacune des zones. Ce cône comprend une cloison interne rotative en fonction de la différence des pressions dans les zones. Dans ce, cette cloison rotative présente un élément rotatif 21 au sens de la présente invention.

Le moteur d'excitation 22 permet d'induire une rotation de l'élément rotatif 21 à partir d'un signal de commande.

Dans le mode préférentiel de réalisation de l'invention, ce moteur d'excitation 22 présente un moteur électrique couplé à un volant d'inertie. Il s'agit donc d'un moteur inertiel.

Selon un autre exemple de réalisation, ce moteur 22 est un moteur couple comprenant alors un rotor dans la partie mobile 16 et un stator dans la partie fixe 15.

L'utilisation d'un moteur inertiel permet toutefois d'éviter un mode de défaillance tel qu'un blocage ou freinage propre à un moteur couple.

Les moyens de stabilisation 23 permettent de stabiliser l'élément rotatif 21 autour de sa position d'équilibre.

Ces moyens de stabilisation peuvent être de nature mécanique ou électrique.

Dans le mode préférentiel de réalisation de l'invention, les moyens de stabilisation 23 sont de nature électrique et sont formés par le moteur d'excitation 22. Ainsi, selon cet exemple de réalisation, le moteur inertiel 22 permet non seulement d'induire une rotation de l'élément mobile 21 mais également de la stabiliser autour de sa position d'équilibre.

Dans une variante, les moyens de stabilisation 23 sont également de nature électrique mais forment des moyens séparés du moteur d'excitation 22.

Le capteur 24 permet de générer un signal de mesure comprenant l'angle de rotation de la partie mobile 16 autour de l'axe de rotation Z.

Ce capteur 24 peut être de nature mécanique comme par exemple un gyromètre inertiel ou de nature électrique ou optique.

Selon l'invention, la sonde 10 comprend en outre un module de traitement 30 raccordé à la fois au moteur 22 et au capteur 24.

Ce module 30 permet de générer un signal de commande destiné au moteur 22 et de recevoir un signal de mesure généré par le capteur 24.

Plus généralement, ce module de traitement 30 permet de mettre en œuvre un procédé d'autotest 100 de la sonde 10 expliqué plus en détail par la suite.

Pour ce faire, le module de traitement 30 se présente au moins partiellement sous la forme d'un logiciel et/ou d'un circuit logique programmable de type FPGA (de l'anglais « Field-Programmable Gate Array »).

Dans le premier cas, le logiciel est mis en œuvre en utilisant un processeur et une mémoire par exemple d'un calculateur embarqué existant. Ce logiciel est donc raccordé au moteur 22 et au capteur 23 par des moyens de transmission connus en soi.

Dans le deuxième cas, le circuit logique peut être disposé à proximité de la partie fixe 15 de la sonde ou alors éloigné de celle-ci.

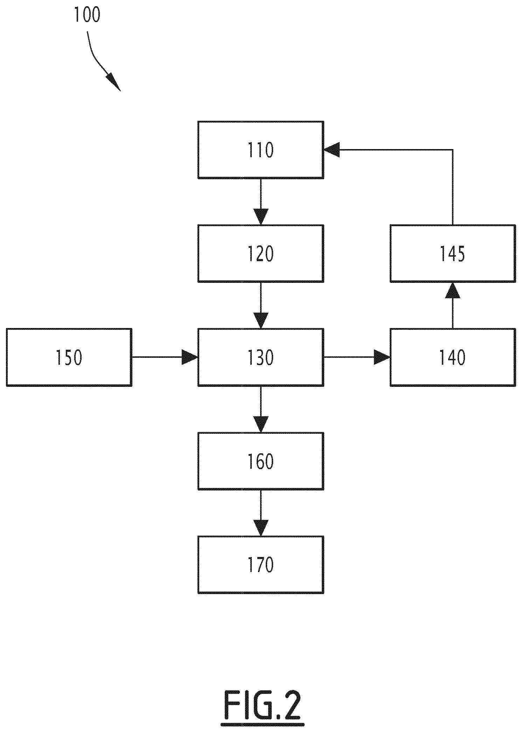

Le procédé d'autotest 100 de la sonde 10 sera désormais expliqué en référence à la figure 2 présentant un organigramme de ses étapes.

Ce procédé 100 est par exemple mis en œuvre de manière périodique ou continue lors du vol de l'aéronef. Selon un autre exemple de réalisation, ce procédé est mis en œuvre à la demande expresse d'un pilote et d'un système avionique.

Lors de l'étape 110 du procédé 100, le module de traitement 30 génère une commande d'excitation angulaire de l'élément rotatif 21 autour de sa position d'équilibre selon des caractéristiques d'excitation connues, à des différents instants $t_1, ..., t_n$.

Les caractéristiques d'excitation présentent par exemple les valeurs du courant envoyé au moteur 22 aux instants correspondants. Ainsi, ces caractéristiques se présentent par exemple sous la forme d'un vecteur d'excitation *Te* ayant la forme suivante :

$$Te = \begin{pmatrix} Te(t_1) \\ ... \\ Te(t_n) \end{pmatrix}.$$

Les caractéristiques d'excitation *Te* définissent une excitation sinusoïdale de l'élément rotatif, de préférence pseudo-aléatoire.

Lors de l'étape 120, le module de traitement 30 acquiert des mesures angulaires relatives à la rotation de l'élément rotatif 31 aux instants $t_1, ..., t_n$ et mesurées par le capteur 24.

Puis, le module de traitement 30 détermine des premiers et des deuxièmes dérivées temporelles de ces mesures pour obtenir une matrice de mesures *M* suivante :

$$M = \begin{pmatrix} \theta''(t_1) & \theta'(t_1) & \theta(t_1) & 1 \\ ... & ... & ... & ... \\ \theta''(t_n) & \theta'(t_n) & \theta(t_n) & 1 \end{pmatrix}.$$

Puis, lors de l'étape suivante 130, le module de traitement 30 détermine un couple parasite *Tq* appliqué à l'élément rotatif 31 à partir des valeurs obtenues dans les étapes 110 et 120.

Ce couple parasite comprend par exemple quatre composantes se présentant sous la forme suivante :

$$Tq = \begin{pmatrix} Tq3 \\ Tq2 \\ Tq1 \\ Tq0 \end{pmatrix},$$

où :

Tq3 est une composante d'ordre 3 appelée composante inertielle et correspondant par exemple à une anomalie de moment d'inertie ;

Tq2 est une composante d'ordre 2 appelée composante d'amortissement ;

Tq1 est une composante d'ordre 1 appelée composante proportionnelle et correspondant par exemple à une anomalie de portance ; et

Tq0 est une composante d'ordre 0 appelée composante mécanique de frottement et de déséquilibre.

La signification physique de ces composantes vient du modèle de rotation de l'élément rotatif 21 se présentant sous la forme suivante :

$$\left( J + \frac{Tq3}{\frac{d^2\theta}{dt^2}} \right) \frac{d^2\theta}{dt^2} + \left( b + \frac{Tq2}{\frac{d\theta}{dt}} \right) \frac{d\theta}{dt} + \left( K + \frac{Tq1}{\theta} \right) \theta + noise(t) + Tq0 + Te(t) = 0,$$

où :

*J, b* sont des coefficients évoluant relativement peu au cours de la vie de la sonde ;

K est un coefficient proportionnel à la vitesse du flux d'air F au carré ; et

*noise(t)* est un bruit aérodynamique.

Cette dernière relation peut également s'écrire sous une forme matricielle au vu des notions précédentes et comme suit :

$$C = \left(M^T M\right)^{-1} M^T Te,$$

où

$$C = \begin{pmatrix} J + Tq3 \\ b + Tq2 \\ K + Tq1 \\ noise(t) + Tq0 \end{pmatrix}.$$

Pour déterminer les composantes *Tq3* et *Tq2,* il est supposé que les coefficients *J* et b sont connus ou peuvent être déterminés par calibration et ne changent pas significativement au cours du fonctionnement de la sonde 10.

Ainsi, ces composantes *Tq3* et *Tq2* peuvent être déterminées directement en utilisant les valeurs obtenues lors des étapes précédentes.

La composante *Tq0* est déterminée en minimisant le bruit aérodynamique.

Pour cela, lors de l'étape 140, le module de traitement 30 acquiert des données relatives au bruit aérodynamique et issues par exemple des capteurs externes telles qu'une centrale inertielle de l'aéronefs.

Puis, lors de l'étape 145, le module de traitement 30 modifie les caractéristiques d'excitation **Te** permettant de réduire ces bruits et met donc à nouveau en œuvre les étapes 110 et 120.

Pour déterminer la composante *Tq1,* le module de traitement 30 met en œuvre une première mécanisation ou une deuxième mécanisation.

Selon la première mécanisation, la composante *Tq1* est déterminée en utilisant au moins une valeur de vitesse de consensus.

Dans un tel cas, le module de traitement 30 met en œuvre d'abord l'étape 150 lors de laquelle il acquiert au moins une valeur du module de la vitesse du flux d'air F, dite vitesse de consensus, issue d'un moyen de mesure matériellement distinct de la sonde 10.

De préférence, ledit moyen de mesure est une autre sonde d'incidence ou une voie de sondes Pitot comportant de préférence plusieurs sondes Pitot dont les mesures sont cohérentes entre elles et plusieurs sondes statiques. Ainsi, dans ce cas, la vitesse de consensus est déterminée en tant que la vitesse pression déterminée par la voie de sondes Pitot.

La vitesse de consensus est préférentiellement décrite par sa moyenne, sa variance, le nombre et la précision attendue des sources si les sources sont multiples.

Puis, avec la vitesse de consensus, le module de traitement 30 détermine le coefficient *K* et à partir de ce coefficient, la composante *Tq1*.

Selon la deuxième mécanisation, le module de traitement 30 fixe la valeur *Tq1* et détermine une valeur du module de la vitesse du flux d'air F, dite vitesse extrapolée, à partir de cette valeur *Tq1.*

Avantageusement, la première et la deuxième mécanisations sont réitérées plusieurs fois.

Dans ce cas, à la fin de l'étape 150, le module de traitement 30 compare la vitesse de consensus selon la première mécanisation avec la vitesse extrapolée selon la deuxième mécanisation, et la valeur de la composante *Tq1* obtenue selon la première mécanisation avec la valeur de la composante *Tq1* utilisée pour la deuxième mécanisation.

Si ces comparaisons entrent dans un domaine de vraisemblance prédéterminé, le module de traitement 30 établit un critère de bon fonctionnement et retient donc les valeurs *Tq1* et de la vitesse de consensus. Dans le cas contraire, le module de traitement 30 réitère la première et la deuxième mécanisations.

Lors de l'étape 160, le module de traitement 30 compare au moins une composante du couple parasite **Tq** avec au moins un seuil prédéterminé.

De préférence, lors de cette étape, le module de traitement 30 compare chacune des composantes du couple parasite **Tq** avec au moins un seuil prédéterminé.

Puis, lors de l'étape 170, le module de traitement 30 diagnostique une défaillance de la sonde lorsque lors de l'étape 160, au moins une des composantes du couple parasite **Tq** dépasse le seuil correspondant.

Lorsqu'une défaillance est diagnostiquée, le module de traitement 30 émet par exemple une alarme destinée au pilote ou à tout autre système avionique.

Avantageusement, selon l'invention, la nature de défaillance peut être déterminée en identifiant la composante du couple parasite *Tq* ayant dépassé le seuil correspondant.

En particulier, lorsqu'il s'agit de la composante *Tq0,* la défaillance peut être due à un frottement ou à un déséquilibre des masses de la sonde correspondante.

Lorsqu'il s'agit de la composante *Tq1,* la défaillance peut correspondre à une anomalie de portance aérodynamique de la palette : soit la palette est cassée ou déformée, soit elle est couverte de givre.

Les cas de givrage et de casse sont par ailleurs détectables par la composante inertielle *Tq3.*

Pour une sonde donnée, le cas de déformation peut être facilement diagnostiqué en utilisant des données issues des autres sondes car de manière générale, deux sondes ne peuvent pas se déformer de la même façon.

Finalement, le dépassement du seuil correspondant par la composante *Tq2* signifierait un amortissement anormal de la palette.

On conçoit alors que le procédé d'autotest selon l'invention permet de mettre en œuvre une fonction d'autotest de la sonde 10 pendant le vol de l'aéronef, sans utilisation des données issues des autres sondes d'incidence.

Cela permet un diagnostic sans recourir à un vote majoritaire, ce qui offre le niveau de sûreté voulu en conservant une architecture à deux sondes. Grâce à la localisation de la défaillance qu'il permet, laquelle vient considérablement renforcer la localisation par le vote majoritaire, le dispositif renforce intégrité et disponibilité également sur les architecture à plus de deux sondes.

Le dispositif permet d'effectuer une vérification des informations provenant des autres sondes utilisées dans l'aéronef et notamment, des sondes Pitot permettant de mesurer la vitesse pression du flux d'air F.

En effet, généralement, un aéronef comprend une voie de mesure composée d'une pluralité de sondes d'incidence et une voie de mesure composée de sondes Pitot.

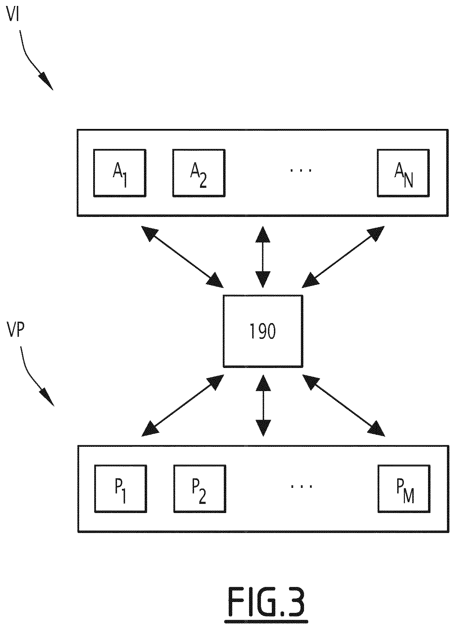

La figure 3 présente une voie de sondes d'incidence VI comportant une pluralité de sondes d'incidence $A_1,...,A_N$ et une voie de sondes Pitot VP comportant une pluralité de sondes Pitot $P_1,...,P_M$, chacune des sondes Pitot étant apte à mesurer une pression dite totale . La voie de sondes Pitot VP comprend en outre une pluralité de sondes statiques (non-illustrées) aptes à mesurer une pression dite statique.

La voie de sondes Pitot permet ainsi de mesurer la vitesse pression du flux d'air F en utilisant des valeurs de pression totale et de pression statique.

Chacune des sondes $A_1,...,A_N$ d'incidence est analogue à la sonde d'incidence 10 décrite précédemment dans la mesure où elle permet de mettre en œuvre un procédé d'autotest tel que décrit précédemment.

La figure 3 présente en outre un module de vérification 190 se présentant au moins partiellement sous la forme d'un logiciel et/ou d'un circuit logique programmable de type FPGA (de l'anglais « Field-Programmable Gate Array »).

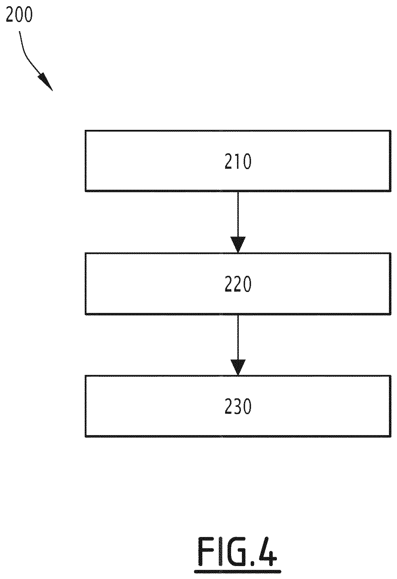

Ce module de vérification 190 permet de vérifier l'intégrité des données fournies par les deux voies VI et VP et pour ce faire, met en œuvre un procédé de vérification 200 qui sera désormais expliqué en référence à la figure 4 présentant un organigramme de ses étapes.

Ce procédé de vérification est mis en œuvre lorsqu'aucune défaillance de fonctionnement des sondes d'incidence $A_1,...,A_N$ n'a été détectée suite à la mise en œuvre du procédé d'autotest par le module de traitement 30 de chacune de ces sondes.

Par ailleurs, il est initialement considéré que l'ensemble de l'installation anémométrique, c'est-à-dire les sondes Pitot $P_1,...,P_M$ associées aux sondes statiques et à des moyens de mesure de pression, associés ou non à un lidar, indique une valeur de vitesse de type « vitesse pression » du flux d'air F qui sera appelée par la suite première valeur de vitesse.

Dans le présent document, le terme « vitesse du flux d'air » ou « vitesse de l'air » désigne la « vitesse pression », calculée à partir des seules valeurs fournies par les sondes Pitot et les sondes statiques

Comme cela est connu en soi, la vitesse pression peut être également nommée vitesse conventionnelle ou « Conventional Air Speed » ou « CAS » en anglais. En particulier, cette vitesse pression ne doit pas être confondue avec la vitesse propre ou « True Air Speed » ou « TAS » qui désigne la vélocité moyenne des molécules d'air.

Lors de l'étape initiale 210, le module de vérification 190 acquiert l'ensemble des premières valeurs de vitesse indiquées via par les sondes Pitot $P_1,...,P_M$ et/ou via le ou les lidars.

Lors de la même étape, ce module de vérification 190 acquiert en outre des valeurs de vitesses du flux d'air F déterminées par les modules de traitement 30 de l'ensemble des sondes d'incidence $A_1,...,A_N$ lors de l'étape 130.

Chacune de ces valeurs de vitesse sera appelée par la suite deuxième valeur de vitesse.

Lors de l'étape 220 suivante, le module de vérification 190 compare les deuxièmes valeurs de vitesse avec les premières valeurs de vitesse et suite à cette comparaison, retient des valeurs de vitesse pour indiquer la vitesse du flux d'air F.

Dans cette comparaison, plusieurs cas sont possibles.

En particulier, lorsque l'ensemble des premières et deuxièmes valeurs de vitesse sont concordantes entre elles, le module de vérification 190 conserve à précision nominale l'ensemble des premières valeurs de vitesse et des deuxièmes valeurs de vitesse.

Lorsque l'une des premières valeurs de vitesse est discordante avec les autres premières valeurs de vitesse et avec les deuxièmes valeurs de vitesse qui sont concordantes entre elles et avec les autres premières valeurs de vitesse, le module de vérification 190 conserve lesdites autres premières valeurs de vitesse et l'ensemble des deuxièmes valeurs de vitesse à précision nominale.

Lorsque les premières valeurs de vitesse sont discordantes entre elles et aucune de ces valeurs ne concorde avec les deuxièmes valeurs de vitesse qui sont concordantes entres elles, le module de vérification 190 conserve les premières valeurs de vitesse sont conservées à précision dégradée et les deuxièmes valeurs de vitesse à précision nominale.

Lorsque l'ensemble des premières valeurs sont concordantes entre elles mais discordantes avec les deuxièmes valeurs de vitesse qui sont concordantes entre elles, le module de vérification 190 conserve l'ensemble des premières valeurs de vitesse et des deuxièmes valeurs de vitesse à précision nominale avec une indication de doute sur les valeurs fournies.

Dans tous les autres cas, aucune valeur de vitesse n'est retenue par le module de vérification 190.

Lors de l'étape suivant 230, le module de vérification 190 communique les valeurs de vitesse conservées éventuellement avec leur précision au pilote ou à tout autre système avionique.

On conçoit ainsi que le procédé de vérification 200 selon l'invention permet de vérifier l'intégralité des sondes Pitot. Cela présente un avantage particulier de l'invention car parmi l'ensemble des constituants d'un système anémométrique équipant généralement un aéronef, les sondes Pitot sont les constituants dont il est le plus difficile d'établir l'intégrité en vol, étant donné leur environnement.

**Revendications**

1. Procédé d'autotest (100) d'une sonde d'incidence (10), la sonde d'incidence (10) étant apte à mesurer l'angle d'incidence d'un flux d'air (F) dans une région de mesure et comprenant un élément rotatif (21) autour d'un axe de rotation (Z) sous l'influence du flux d'air, l'axe de rotation étant sensiblement perpendiculaire à la direction dudit flux d'air (F), l'élément rotatif (21) définissant une position d'équilibre dans laquelle sa rotation autour de l'axe de rotation (Z) est stabilisée par le flux d'air (F) ;

   le procédé (100) comprenant les étapes suivantes :

   - acquisition (120) de mesures angulaires relatives à la rotation de l'élément rotatif (21) ;
   - détermination (130) d'un couple parasite appliqué à l'élément rotatif à partir des mesures angulaires et des caractéristiques d'excitation *(Te)* ;
   - comparaison (160) d'au moins une composante du couple parasite avec au moins un seuil prédéterminé ;
   - détection (170) d'une défaillance de fonctionnement de la sonde (10) lorsque ladite composante dépasse le seuil prédéterminé ;

   le procédé étant **caractérisé par** l'étape suivante :

   - commande (110) d'une excitation angulaire de l'élément rotatif (21) autour de sa position d'équilibre selon des caractéristiques d'excitation connues *(Te)*, les caractéristiques d'excitation *(Te)* définissant une excitation sinusoïdale de l'élément rotatif.

2. Procédé d'autotest (100) selon la revendication 1, dans lequel le couple parasite est déterminé en utilisant une fonction de transfert décrivant la rotation de l'élément rotatif (21) en présence de ce couple parasite, le couple parasite étant défini par une composante inertielle *(Tq3)* telle qu'une anomalie de moment d'inertie, une composante d'amortissement *(Tq2),* une composante proportionnelle *(Tq1)* telle qu'un couple aérodynamique anormal, et une composante de frottement ou de déséquilibre des masses *(Tq0).*

3. Procédé d'autotest selon la revendication 2, dans lequel, la composante inertielle *(Tq3),* la composante d'amortissement *(Tq2)* et la composante de frottement et de déséquilibre *(Tq0)* sont déterminées en identifiant pour chaque composante correspondante la part du couple parasite en retranchant une part prédéterminée d'un couple normal maximal dans son domaine de vraisemblance.

4. Procédé d'autotest (100) selon l'une quelconque des revendications précédentes, comprenant en outre une étape (150) d'acquisition d'au moins une valeur du module de la vitesse du flux d'air, dite vitesse de consensus, issue de moyens de mesure matériellement distincts de ladite sonde ;
de préférence lesdits moyens de mesure étant une autre sonde d'incidence ou une voie de mesure de vitesse comprenant de préférence une ou plusieurs sondes Pitot et/ou un ou plusieurs lidars.

5. Procédé d'autotest selon la revendication 4 prise en combinaison avec la revendication 2, dans lequel la composante proportionnelle *(Tq1)* et une vitesse pression du flux d'air sont déterminées l'une par rapport à l'autre en utilisant une première mécanisation ou une deuxième mécanisation ;

selon la première mécanisation, la vitesse de consensus est insérée dans la fonction de transfert, la composante proportionnelle *(Tq1)* étant déterminée en utilisant les autres composantes du couple parasite;

selon la deuxième mécanisation, la composante proportionnelle *(Tq1)* est déterminée à partir d'une valeur prédéterminée, une valeur de la vitesse pression, dite vitesse extrapolée, étant déterminée en utilisant l'ensemble des composantes du couple parasite ;

la vitesse de consensus selon la première mécanisation étant comparée à la vitesse extrapolée selon la seconde mécanisation, d'une part,

la composante proportionnelle *(Tq1)* selon la première mécanisation étant comparée à la composante proportionnelle *(Tq1)* selon la deuxième mécanisation d'autre part,

un critère de bon fonctionnement étant établi si lesdites comparaisons entrent dans un domaine de vraisemblance prédéterminé.

6. Procédé d'autotest (100) selon l'une quelconque des revendications précédentes, dans lequel la fréquence de ladite excitation sinusoïdale est pseudo-aléatoire.

7. Procédé d'autotest (100) selon l'une quelconque des revendications précédentes, comprenant en outre les étapes suivantes :

- acquisition (140) de données relatives au bruit aérodynamique ;
- modification (150) des caractéristiques d'excitation en fonction des données relatives au bruit aérodynamique acquises.

8. Procédé de vérification (200) de la vitesse pression d'un flux d'air (F) fournie par une voie de sondes Pitot (VP), la voie de sondes Pitot comprenant une pluralité de sondes Pitot $(P_1,...,P_M)$ et une pluralité de sondes statiques, la voie de sondes Pitot (VP) étant apte à fournir des valeurs de la vitesse pression du flux d'air, dites premières valeurs de vitesse, déterminées en utilisant des valeurs issues des sondes Pitot $(P_1,...,P_M)$ et des sondes statiques ;

le procédé de vérification (200) étant mis en œuvre en utilisant une voie de sondes d'incidence (VI), la voie de sondes d'incidence (VI) comprenant une pluralité de sondes d'incidence $(A_1,...,A_N)$, chaque sonde d'incidence $(A_1,...,A_N)$ étant apte à mesurer l'angle d'incidence du flux d'air (F) et comprenant un élément rotatif (21) autour d'un axe de rotation (Z) sous l'influence du flux d'air (F) et un module de traitement (30) apte à mettre en œuvre le procédé d'autotest selon l'une quelconque des revendications 1 à 7 prise en combinaison avec la revendication 5;

le procédé de vérification (200) étant mis en œuvre lorsqu'aucune défaillance de fonctionnement des sondes d'incidence $(A_1,...,A_N)$ n'a été détectée suite à la mise en œuvre du procédé d'autotest (100) par le module de traitement (30) de chacune des sondes d'incidence $(A_1,...,A_N)$ ;

le procédé de vérification (200) comprenant les étapes suivantes :

- acquisition (210) des valeurs de la vitesse pression déterminées par les modules de traitement (30) de l'ensemble des sondes d'incidence $(A_1,...,A_N)$, chacune de ces valeurs étant dite deuxième valeur de vitesse ;
- comparaison (220) des deuxièmes valeurs de vitesse avec les premières valeurs de vitesse et parmi ces valeurs, détermination des valeurs de vitesse retenues pour indiquer la vitesse pression du flux d'air ;
- communication (230) des valeurs de vitesse retenues avec leur précision.

9. Procédé de vérification (200) selon la revendication 8, dans lequel lorsque lors de l'étape de comparaison (220) :

- l'ensemble des premières et deuxièmes valeurs de vitesse sont concordantes entre elles, l'ensemble des premières valeurs de vitesse et des deuxièmes valeurs de vitesse sont retenues à précision nominale ;
- l'une des premières valeurs de vitesse est discordante avec les autres premières valeurs de vitesse et avec les deuxièmes valeurs de vitesse qui sont concordantes entre elles et avec les autres premières valeurs de vitesse, lesdites autres premières valeurs de vitesse et l'ensemble des deuxièmes valeurs de vitesse sont retenues à précision nominale ;

- les premières valeurs de vitesse sont discordantes entre elles et aucune de ces valeurs ne concorde avec les deuxièmes valeurs de vitesse qui sont concordantes entres elles, les premières valeurs de vitesse sont conservées à précision dégradée et les deuxièmes valeurs de vitesse sont retenues à précision nominale ;
- l'ensemble des premières valeurs sont concordantes entre elles mais discordantes avec les deuxièmes valeurs de vitesse qui sont concordantes entre elles, l'ensemble des premières valeurs de vitesse et des deuxièmes valeurs de vitesse sont retenues à précision nominale avec une indication de doute sur les valeurs fournies ;

aucune valeur de vitesse n'étant retenue dans les autres cas.

10. Sonde d'incidence (10) apte à mesurer l'angle d'incidence d'un flux d'air (F) dans une région de mesure et comprenant un élément rotatif (21) autour d'un axe de rotation (Z) sous l'influence du flux d'air (F), l'axe de rotation (Z) étant sensiblement perpendiculaire à la direction dudit flux d'air (F), l'élément rotatif (21) définissant une position d'équilibre dans laquelle sa rotation autour de l'axe de rotation (Z) est stabilisée par le flux d'air (F) ;
la sonde d'incidence (10) étant **caractérisée en ce qu'**elle comprend en outre un module de traitement (30) apte à mettre en œuvre un procédé d'autotest (100) selon l'une quelconque des revendications 1 à 7.

11. Sonde (10) selon la revendication 10, comprenant en outre un moteur d'excitation (22) apte à induire une excitation de l'élément rotatif (21) autour de sa position d'équilibre selon les caractéristiques d'excitation (Te), de préférence le moteur d'excitation (22) étant un moteur électrique couplé à un volant d'inertie.

12. Sonde (10) selon la revendication 10 ou 11, comprenant en outre des moyens de stabilisation (23) de l'élément rotatif (21) autour de sa position d'équilibre, lesdits moyens de stabilisation (23) étant de nature mécanique ou électrique.

13. Sonde (10) selon la revendication 11 et 12, dans laquelle le moteur d'excitation (22) présente les moyens de stabilisation (23) de nature électrique.

14. Sonde (10) selon l'une quelconque des revendications 10 à 13, comprenant en outre un capteur (24) apte à générer des mesures angulaires relatives à la rotation de l'élément rotatif (21).

15. Sonde (10) selon l'une quelconque des revendications 10 à 14, dans laquelle l'élément rotatif (21) est une girouette exposée directement au flux d'air (F).

16. Sonde (10) selon l'une quelconque des revendications 10 à 14, dans laquelle l'élément rotatif (21) est compris dans un cône exposé au flux d'air (F) et symétrique par rapport à l'axe de rotation (Z).

## Patentansprüche

1. Selbsttestverfahren (100) einer Einfallssonde (10), wobei die Einfallssonde (10) geeignet ist, um den Einfallswinkel eines Luftstroms (F) in einem Messbereich zu messen, und umfassend ein Drehelement (21) um eine Drehachse (Z) unter dem Einfluss des Luftstroms, wobei die Drehachse im Wesentlichen senkrecht zu der Richtung des Luftstroms (F) ist, wobei das Drehelement (21) eine Gleichgewichtsposition definiert, in der seine Drehung um die Drehachse (Z) durch den Luftstrom (F) stabilisiert wird;

das Verfahren (100) umfassend die folgenden Schritte:

- Erfassen (120) von Winkelmessungen in Bezug auf die Drehung des Drehelements (21);
- Bestimmen (130) eines auf das Drehelement ausgeübten parasitären Drehmoments anhand der Winkelmessungen und der Erregungscharakteristiken (Te);
- Vergleichen (160) von mindestens einer Komponente des parasitären Drehmoments mit mindestens einem vorbestimmten Schwellenwert;
- Erfassen (170) eines Funktionsausfalls der Sonde (10), wenn die Komponente den vorbestimmten Schwellenwert überschreitet;

wobei das Verfahren durch den folgenden Schritt gekennzeichnet ist:

- Steuern (110) einer Winkelerregung des Drehelements (21) um seine Gleichgewichtsposition gemäß bekannten Erregungscharakteristiken (Te), wobei die Erregungscharakteristiken (Te) eine sinusförmige

**EP 4 097 488 B1**

Erregung des Drehelements definieren.

2. Selbsttestverfahren (100) nach Anspruch 1, wobei das parasitäre Drehmoment unter Verwendung einer Übertragungsfunktion bestimmt wird, die die Drehung des Drehelements (21) in Anwesenheit dieses parasitären Drehmoments beschreibt, wobei das parasitäre Drehmoment durch eine Trägheitskomponente *(Tq3)* wie beispielsweise ein anomales Trägheitsmoment, eine Dämpfungskomponente *(Tq2),* eine Proportionalkomponente *(Tq1)* wie beispielsweise ein anomales aerodynamisches Drehmoment und eine Reibungs- oder Unwuchtkomponente *(Tq0)* definiert ist.

3. Selbsttestverfahren nach Anspruch 2, wobei die Trägheitskomponente *(Tq3),* die Dämpfungskomponente *(Tq2)* und die Reibungs- und Unwuchtkomponente *(Tq0)* bestimmt werden, indem für jede entsprechende Komponente der Anteil des parasitären Drehmoments identifiziert wird, indem ein vorbestimmter Anteil eines maximalen normalen Drehmoments in seinem Wahrscheinlichkeitsbereich subtrahiert wird.

4. Selbsttestverfahren (100) nach einem der vorherigen Ansprüche, ferner umfassend einen Schritt (150) zum Erfassen mindestens eines Werts des Moduls der Geschwindigkeit des Luftstroms, der sogenannten Konsensusgeschwindigkeit, der von Messeinrichtungen stammt, die materiell von der Sonde getrennt sind;
vorzugsweise sind die Messeinrichtungen eine weitere Einfallssonde oder ein Geschwindigkeitsmesskanal, vorzugsweise umfassend eine oder mehrere Pitot-Sonden und/oder ein oder mehrere Lidars.

5. Selbsttestverfahren nach Anspruch 4 in Kombination mit Anspruch 2, wobei die Proportionalkomponente ($Tq1$) und eine Druckgeschwindigkeit des Luftstroms in Bezug aufeinander unter Verwendung einer ersten Mechanisierung oder einer zweiten Mechanisierung bestimmt werden;

gemäß der ersten Mechanisierung die Konsensgeschwindigkeit in die Übertragungsfunktion eingefügt wird, wobei die Proportionalkomponente *(Tq1)* unter Verwendung der anderen Komponenten des parasitären Drehmoments bestimmt wird;
gemäß der zweiten Mechanisierung die Proportionalkomponente ($Tq1$) ausgehend von einem vorbestimmten Wert bestimmt wird, wobei ein Wert der Druckgeschwindigkeit, die sogenannte extrapolierte Geschwindigkeit, unter Verwendung der Gesamtheit der Komponenten des parasitären Drehmoments bestimmt wird;
wobei die Konsensgeschwindigkeit gemäß der ersten Mechanisierung einerseits mit der extrapolierten Geschwindigkeit gemäß der zweiten Mechanisierung verglichen wird,
die Proportionalkomponente ($Tq1$) gemäß der ersten Mechanisierung andererseits mit der Proportionalkomponente *(Tq1)* gemäß der zweiten Mechanisierung verglichen wird,
ein Kriterium für eine gute Funktionsweise festgelegt wird, wenn die genannten Vergleiche in einen vorbestimmten Wahrscheinlichkeitsbereich fallen.

6. Selbsttestverfahren (100) nach einem der vorherigen Ansprüche, wobei die Frequenz der sinusförmigen Anregung pseudozufällig ist.

7. Selbsttestverfahren (100) nach einem der vorherigen Ansprüche, ferner umfassend die folgenden Schritte:

- Erfassen (140) von Daten in Bezug auf den aerodynamischen Lärm;
- Ändern (150) der Erregungscharakteristika abhängig von den erfassten Daten in Bezug auf aerodynamischen Lärm.

8. Prüfungsverfahren (200) der Druckgeschwindigkeit eines Luftstroms (F), die von einem Pitot-Sonden-Kanal (VP) bereitgestellt wird, wobei der Kanal von Pitot-Sonden eine Vielzahl von Pitot-Sonden ($P_1,...,P_M$) und eine Vielzahl von statischen Sonden umfasst, wobei der Kanal von Pitot-Sonden (VP) geeignet ist, um Werte der Druckgeschwindigkeit des Luftstroms, sogenannte erste Geschwindigkeitswerte, bereitzustellen, die unter Verwendung von Werten bestimmt werden, die von den Pitot-Sonden ($P_1,...,P_M$) und den statischen Sonden stammen;

wobei das Prüfungsverfahren (200) unter Verwendung eines Einfallssondenwegs (VI) durchgeführt wird, wobei der Einfallssondenweg (VI) eine Vielzahl von Einfallssonden ($A_1,...,A_N$) umfasst, wobei jede Einfallssonde ($A_1,...,A_N$) geeignet ist, um den Einfallswinkel des Luftstroms (F) zu messen, und umfassend ein Drehelement (21) um eine Drehachse (Z) unter dem Einfluss des Luftstroms (F), sowie ein Verarbeitungsmodul (30), das geeignet ist, um das Selbsttestverfahren nach einem der Ansprüche 1 bis 7 in Kombination mit Anspruch 5 durchzuführen;

12

wobei das Prüfungsverfahren (200) durchgeführt wird, wenn kein Funktionsausfall der Einfallssonden ($A_1,...,A_N$) nach Durchführung des Selbsttestverfahrens (100) durch das Verarbeitungsmodul (30) jeder der Einfallssonden ($A_1,...,A_N$) festgestellt wurde;

das Prüfungsverfahren (200) umfassend die folgenden Schritte:

- Erfassen (210) der Werte der Druckgeschwindigkeit, die von den Verarbeitungsmodulen (30) der Gesamtheit der Einfallssonden ($A_1,...,A_N$) bestimmt werden, wobei jeder dieser Werte als zweiter Geschwindigkeitswert bezeichnet wird;
- Vergleichen (220) der zweiten Geschwindigkeitswerte mit den ersten Geschwindigkeitswerten und Bestimmen der Geschwindigkeitswerte, die zum Angeben der Druckgeschwindigkeit des Luftstroms ausgewählt werden;
- Mitteilen (230) der gewählten Geschwindigkeitswerte mit ihrer Genauigkeit.

9. Prüfungsverfahren (200) nach Anspruch 8, wobei, wenn in dem Vergleichsschritt (220):

- alle ersten und zweiten Geschwindigkeitswerte miteinander übereinstimmen, alle ersten Geschwindigkeitswerte und zweiten Geschwindigkeitswerte mit Nenngenauigkeit beibehalten werden;
- einer der ersten Geschwindigkeitswerte mit den anderen ersten Geschwindigkeitswerten und mit den zweiten Geschwindigkeitswerten, die untereinander und mit den anderen ersten Geschwindigkeitswerten übereinstimmen, nicht übereinstimmt, die anderen ersten Geschwindigkeitswerte und alle zweiten Geschwindigkeitswerte mit Nenngenauigkeit beibehalten werden;
- die ersten Geschwindigkeitswerte nicht miteinander übereinstimmen und keiner dieser Werte mit den zweiten Geschwindigkeitswerten übereinstimmt, die miteinander übereinstimmen, die ersten Geschwindigkeitswerte mit verschlechterter Genauigkeit beibehalten werden und die zweiten Geschwindigkeitswerte mit Nenngenauigkeit beibehalten werden;
- alle ersten Geschwindigkeitswerte untereinander übereinstimmen, aber nicht mit den zweiten Geschwindigkeitswerten übereinstimmen, die untereinander übereinstimmen, alle ersten Geschwindigkeitswerte und zweiten Geschwindigkeitswerte auf Nenngenauigkeit mit einem Hinweis auf Zweifel an den bereitgestellten Werten beibehalten werden;

wobei in den anderen Fällen kein Geschwindigkeitswert beibehalten wird.

10. Einfallssonde (10), die geeignet ist, um den Einfallswinkel eines Luftstroms (F) in einem Messbereich zu messen, sowie ein Drehelement (21) um eine Drehachse (Z) unter dem Einfluss des Luftstroms (F), wobei die Drehachse im Wesentlichen senkrecht zu der Richtung des Luftstroms (F) ist, wobei das Drehelement (21) eine Gleichgewichtsposition definiert, in der seine Drehung um die Drehachse (Z) durch den Luftstrom (F) stabilisiert wird;

wobei die Einfallssonde (10) **dadurch gekennzeichnet ist, dass** sie ferner ein Verarbeitungsmodul (30) umfasst, das geeignet ist, um ein Selbsttestverfahren (100) nach einem der Ansprüche 1 bis 7 durchzuführen.

11. Sonde (10) nach Anspruch 10, ferner umfassend einen Erregungsmotor (22), der geeignet ist, um eine Erregung des Drehelements (21) um seine Gleichgewichtsposition gemäß den Erregungsmerkmalen (*Te*) zu induzieren, wobei der Erregungsmotor (22) vorzugsweise ein Elektromotor ist, der mit einem Trägheitsrad gekoppelt ist.

12. Sonde (10) nach Anspruch 10 oder 11, ferner umfassend Stabilisierungseinrichtungen (23) des Drehelements (21) um seine Gleichgewichtsposition, wobei die Stabilisierungsmittel (23) mechanischer oder elektrischer Natur sind.

13. Sonde (10) nach Anspruch 11 und 12, wobei der Erregungsmotor (22) die Stabilisierungseinrichtungen (23) elektrischer Natur aufweist.

14. Sonde (10) nach einem der Ansprüche 10 bis 13, ferner umfassend einen Sensor (24), der geeignet ist, um Winkelmessungen zu erzeugen, die sich auf die Drehung des Drehelements (21) beziehen.

15. Sonde (10) nach einem der Ansprüche 10 bis 14, wobei das Drehelement (21) eine Windfahne ist, die direkt dem Luftstrom (F) ausgesetzt ist.

16. Sonde (10) nach einem der Ansprüche 10 bis 14, wobei das Drehelement (21) in einem Kegel enthalten ist, der dem Luftstrom (F) ausgesetzt und symmetrisch zu der Drehachse (Z) ist.

**Claims**

1. A method for self-testing (100) an angle-of-attack probe (10), the angle-of-attack probe (10) being able to measure the angle of attack of an airflow (F) in a measurement region and comprising a rotary element (21) that is rotatable about an axis of rotation (Z) under the influence of the airflow, the axis of rotation being substantially perpendicular to the direction of said airflow (F), the rotary element (21) defining an equilibrium position in which its rotation about the axis of rotation (Z) is stabilized by the airflow (F);

   the method (100) comprising the following steps:

   - acquiring (120) angular measurements relative to the rotation of the rotary element (21);
   - determining (130) a parasitic torque applied to the rotary element from angular measurements and excitation characteristics *(Te);*
   - comparing (160) at least one component of the parasitic torque with at least one predetermined threshold;
   - detecting (170) an operating fault in the probe (10) when said component exceeds the predetermined threshold;

   the method being **characterized by** the following step:

   - controlling (110) an angular excitation of the rotary element (21) about its equilibrium position according to known excitation characteristics *(Te),* the excitation characteristics *(Te)* defining a sinusoidal excitation of the rotary element.

2. The self-testing method (100) according to claim 1, wherein the parasitic torque is determined by using a transfer function describing the rotation of the rotary element (21) in the presence of this parasitic torque, the parasitic torque being defined by an inertial component *(Tq3)* such as a moment of inertia anomaly, a damping component *(Tq2),* a proportional component *(Tq1)* such as an abnormal aerodynamic torque, and a friction or imbalance component of the masses *(Tq0).*

3. The self-testing method according to claim 2, wherein the inertial component *(Tq3),* the damping component *(Tq2)* and the friction and imbalance component *(Tq0)* are determined by identifying the portion of the parasitic torque for each corresponding component by subtracting a predetermined portion of a maximum normal torque in its likelihood domain.

4. The self-testing method (100) according to any one of the preceding claims, further comprising a step (150) for acquiring at least one value of the airflow velocity modulus, called consensus velocity, originating from measuring means that are materially separate from said probe;
   said measuring means preferably being another angle-of-attack probe or a velocity measurement series preferably comprising one or several Pitot probes and/or one or several lidars.

5. The self-testing method according to claim 4 combined with claim 2, wherein the proportional component *(Tq1)* and a pressure velocity of the airflow are determined with respect to one another by using a first mechanization or a second mechanization;

   according to the first mechanization, the consensus velocity is inserted into the transfer function, the proportional component *(Tq1)* being determined by using the other components of the parasitic torque;
   according to the second mechanization, the proportional component *(Tq1)* is determined from a predetermined value, a pressure velocity value, called extrapolated velocity, being determined by using the set of components of the parasitic torque;
   the consensus velocity according to the first mechanization being compared to the extrapolated velocity according to the second mechanization, on the one hand,
   the proportional component *(Tq1)* according to the first mechanization being compared to the proportional component *(Tq1)* according to the second mechanization, on the other hand,
   a proper operation criterion being established if said comparisons fall within a predetermined likelihood domain.

6. The self-testing method (100) according to any one of the preceding claims, wherein the frequency of said sinusoidal excitation is pseudo-random.

7. The self-testing method (100) according to any one of the preceding claims, further comprising the following steps:

   - acquiring (140) data relative to the aerodynamic noise;
   - modifying (150) the excitation characteristics as a function of the acquired data relative to the aerodynamic noise.

8. A method for checking (200) the pressure velocity of an airflow (F) supplied by a series of Pitot probes (VP), the series of Pitot probes comprising a plurality of Pitot probes ($P_1$,...,$P_M$) and a plurality of static probes, the series of Pitot probes (VP) being able to supply values of the airflow pressure velocity, called first velocity values, determined by using values originating from the Pitot probes ($P_1$,...,$P_M$) and the static probes;

   the checking method (200) being implemented by using a series of angle-of-attack probes (VI), the series of angle-of-attack probes (VI) comprising a plurality of angle-of-attack probes ($A_1$,...,$A_N$), each angle-of-attack probe ($A_1$,...,$A_N$) being able to measure the angle of attack of the airflow (F) and comprising a rotary element (21) that rotates about an axis of rotation (Z) under the influence of the airflow (F) and a processing module (30) able to carry out the self-testing method according to any one of claims 1 to 7 combined with claim 5;
   the checking method (200) being implemented when no operating fault of the angle-of-attack probes ($A_1$,...,$A_N$) has been detected subsequent to implementation of the self-testing method (100) by the processing module (30) of each of the angle-of-attack probes ($A_1$,...,$A_N$)
   the checking method (200) comprising the following steps:

   - acquiring (210) pressure velocity values determined by the processing modules (30) of the set of angle-of-attack probes ($A_1$,...,$A_N$), each of these values being called second velocity value;
   - comparing (220) the second velocity values with the first velocity values and, among these values, determining velocity values used to indicate the pressure velocity of the airflow;
   - communicating (230) the used velocity values with their precision.

9. The checking method (200) according to claim 8, wherein, during the comparison step (220):

   - all of the first and second velocity values are consistent with one another, the set of first velocity values and of second velocity values are used at nominal precision;
   - one of the first velocity values is inconsistent with respect to the other first velocity values and the second velocity values, which are consistent amongst themselves and with respect to the other first velocity values, said other first velocity values and all of the second velocity values are used at nominal precision;
   - the first velocity values are inconsistent amongst themselves and none of these values is consistent with the second velocity values, which are consistent amongst themselves, said first velocity values are used at degraded precision and the second velocity values are used at nominal precision;
   - all of the first values are consistent amongst themselves but inconsistent with respect to the second velocity values, which are consistent with one another, the set of first velocity values and of second velocity values are used at nominal precision with an indication of doubt regarding the supplied values;

   no velocity value is used in other cases.

10. An angle-of-attack probe (10) able to measure the angle of attack of an airflow (F) in a measurement region and comprising a rotary element (21) that is rotatable about an axis of rotation (Z) under the influence of the airflow (F), the axis of rotation (Z) being substantially perpendicular to the direction of said airflow (F), the rotary element (21) defining an equilibrium position in which its rotation about the axis of rotation (Z) is stabilized by the airflow (F);
    the angle-of-attack probe (10) being **characterized in that** it further comprises a processing module (30) able to implement a self-testing method (100) according to any one of claims 1 to 7.

11. The probe (10) according to claim 10, further comprising an excitation motor (22) able to cause an excitation of the rotary element (21) about its equilibrium position according to the excitation characteristics *(Te),* preferably the excitation motor (22) being an electric motor coupled to a flywheel.

12. The probe (10) according to claim 10 or 11, further comprising stabilization means (23) for stabilizing the rotary element (21) about its equilibrium position, said stabilization means (23) being mechanical or electrical in nature.

13. The probe (10) according to claim 11 and 12, wherein the excitation motor (22) has electrical stabilization means (23).

14. The probe (10) according to any one of claims 10 to 13, further comprising a sensor (24) capable of generating angular measurements relative to the rotation of the rotary element (21).

15. The probe (10) according to any one of claims 10 to 14, wherein the rotary element (21) is a vane exposed directly to the airflow (F).

16. The probe (10) according to any one of claims 10 to 14, wherein the rotary element (21) is comprised in a cone exposed to the airflow (F) and symmetrical relative to the axis of rotation (Z).

## FIG.1

100

## FIG.2

VI

VP

FIG.3

200

```
┌─────────────────────────────────┐
│              210                │
└─────────────────────────────────┘
                │
                ▼
┌─────────────────────────────────┐
│              220                │
└─────────────────────────────────┘
                │
                ▼
┌─────────────────────────────────┐
│              230                │
└─────────────────────────────────┘
```

## FIG.4

**RÉFÉRENCES CITÉES DANS LA DESCRIPTION**

**Documents brevets cités dans la description**

- FR 2626375
- US 2019242924 A1
- EP 2385378 A1
- RU 2124711 C1